# EUROPEAN PATENT APPLICATION

(11) **EP 4 827 097 A1**
(43) Date of publication of application: **21.10.2026**
(21) Application number: 25213251.9
(22) Date of filing: 04.11.2025
(51) Int. Cl.: H04N 21/414, G06V 20/40, H04N 21/422, H04N 21/4223, H04N 21/8549

(54) **METHOD, APPARATUS, DEVICE, AND STORAGE MEDIUM FOR IMAGE INTERACTION**

(30) Priority: 16.04.2025 CN 202510481000
(71) Applicant: Beijing Zitiao Network Technology Co., Ltd., Beijing 100190 (CN)
(72) Inventor: CAI, Wei, Beijing, 100028 (CN); ZHAO, Weize, Beijing, 100028 (CN); LI, Xinyu, Beijing, 100028 (CN); QIAO, Wende, Beijing, 100028 (CN); DU, Xingjie, Beijing, 100028 (CN)
(74) Representative: Marks & Clerk LLP

(57) **Abstract**

Embodiments of the disclosure relate to a method, an apparatus, a device, and a storage medium for image interaction. The method proposed herein is applied to an electronic device, and the method includes: acquiring image data by an image acquisition unit equipped on the electronic device during the electronic device is in a first mode, the image data including a plurality of images corresponding to a target time period; and triggering, in response to the electronic device exiting the first mode, output of record content generated by a pre-trained model based on the image data in an output unit associated with the electronic device. In this way, the embodiments of the disclosure are capable of generating the record content based on the images captured by the electronic device and outputting the record content in the output unit, thereby improving the interaction efficiency of the user.

## Description

### TECHNICAL FIELD

Example embodiments of the present disclosure generally relate to the field of computers, and in particular, to a method, an apparatus, a device, and a computer-readable storage medium for image interaction.

### BACKGROUND

With the increasing maturity of science and technology, the use of electronic devices has gradually become a daily habit of people. For example, a user may use an electronic device to play audio content, check the time, measure physiological data, and so on. In addition, people may also use electronic devices to perform interaction operations. However, the interaction operations supported by existing electronic devices only include some simple interaction operations, such as playing audio, switching audio, etc., which cannot meet the deeper interaction needs of users.

### SUMMARY

In a first aspect of the present disclosure, a method for image interaction is provided, which is applied at an electronic device. The method includes: acquiring image data by an image acquisition unit equipped on the electronic device during the electronic device is in a first mode, the image data including a plurality of images corresponding to a target time period; and triggering, in response to the electronic device exiting the first mode, output of record content generated by a pre-trained model based on the image data in an output unit associated with the electronic device.

In a second aspect of the present disclosure, a method for image interaction is provided, which is applied at a terminal device. The method includes: obtaining image data from an electronic device in wireless communication with the terminal device, the image data being acquired by an image acquisition unit equipped on the electronic device during the electronic device is in a first mode, the image data including a plurality of images corresponding to a target time period; transmitting the image data to a pre-trained model; and outputting, in response to the electronic device exiting the first mode, record content generated by the pre-trained model based on the image data in an output unit associated with the electronic device.

In a third aspect of the present disclosure, a method for image interaction is provided, which is applied at an image interaction system. The image interaction system includes an electronic device and a terminal device in wireless communication. The method includes: acquiring image data by an image acquisition unit equipped on the electronic device during the electronic device is in a first mode; sending, by the electronic device, the image data to the terminal device; transmitting, by the terminal device, the image data to a pre-trained model; obtaining, by the terminal device and in response to the electronic device exiting the first mode, record content generated by the pre-trained model based on the image data; and outputting, by the terminal device, the record content in an output unit associated with the electronic device.

In a fourth aspect of the present disclosure, an apparatus for image interaction is provided, which is applied at an electronic device. The apparatus includes: an image acquisition module configured to acquire image data by an image acquisition unit equipped on the electronic device during the electronic device is in a first mode, the image data including a plurality of images corresponding to a target time period; and a first triggering module configured to trigger, in response to the electronic device exiting the first mode, output of record content generated by a pre-trained model based on the image data in an output unit associated with the electronic device.

In a fifth aspect of the present disclosure, an apparatus for image interaction is provided, which is applied at a terminal device. The apparatus includes: an image obtaining module configured to obtain image data from an electronic device in wireless communication with the terminal device, the image data being acquired by an image acquisition unit equipped on the electronic device during the electronic device is in a first mode, the image data including a plurality of images corresponding to a target time period; a first transmitting module configured to transmit the image data to a pre-trained model; and a second triggering module configured to output, in response to the electronic device exiting the first mode, record content generated by the pre-trained model based on the image data in an output unit associated with the electronic device.

In a sixth aspect of the present disclosure, an apparatus for image interaction is provided, which is applied at an image interaction system. The image interaction system includes an electronic device and a terminal device in wireless communication. The apparatus includes: an image capturing module configured to acquire image data by an image acquisition unit equipped on the electronic device during the electronic device is in a first mode; an image sending module configured to send, by the electronic device, the image data to the terminal device; a second transmitting module configured to transmit, by the terminal device, the image data to a pre-trained model; a content obtaining module configured to obtain, by the terminal device and in response to the electronic device exiting the first mode, record content generated by the pre-trained model based on the image data; and a record presenting module configured to output, by the terminal device, the record content in an output unit associated with the electronic device.

In a seventh aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect, the second aspect or the third aspect.

In an eighth aspect of the present disclosure, a computer-readable storage medium is provided. The computer-readable storage medium has a computer program stored thereon, the computer program when executed by a processor, implements the method of the first aspect, the second aspect or the third aspect.

It should be understood that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
Fig. 1 illustrates a schematic diagram of an example image interaction system in which the embodiments according to the present disclosure may be implemented;
Fig. 2 illustrates a flowchart of an example process for image interaction according to some embodiments of the present disclosure;
FIGS. 3A and 3B illustrate example interfaces according to some embodiments of the present disclosure;
Fig. 4 illustrates a flowchart of an example process of image interaction according to some embodiments of the present disclosure;
Fig. 5 illustrates a flowchart of an example process of image interaction according to some other embodiments of the present disclosure;
Fig. 6 illustrates a flowchart of an example process of image interaction according to some other embodiments of the present disclosure;
Fig. 7 illustrates a schematic structural block diagram of an example apparatus for image interaction according to some embodiments of the present disclosure;
Fig. 8 illustrates a schematic structural block diagram of an example apparatus for image interaction according to some other embodiments of the present disclosure;
Fig. 9 illustrates a schematic structural block diagram of an example apparatus for image interaction according to some other embodiments of the present disclosure; and
Fig. 10 illustrates a block diagram of an electronic device capable of implementing various embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms, and should not be construed as being limited to the embodiments set forth herein. On the contrary, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the headings of any section/sub-section provided herein are not restrictive. Various embodiments are described throughout this article, and any type of embodiment may be included under any section/sub-section. In addition, the embodiments described in any section/sub-section may be combined in any way with any other embodiments described in the same section/sub-section and/or different sections/subsections.

In the description of the embodiments of the present disclosure, the term "include/comprise", and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve data of a user, data acquisition and/or use, etc. These aspects all comply with corresponding laws, regulations and related provisions. In the embodiments of the present disclosure, all collection, acquisition, processing, machining, forwarding, use, etc. of data are carried out on the premise that the user knows and confirms. Accordingly, when implementing the embodiments of the present disclosure, the user should be informed of the type, range of use, use scenarios, etc., of the data or information that may be involved, and the authorization of the user should be obtained, in an appropriate manner in accordance with relevant laws and regulations. The specific manner of informing and/or authorizing may vary according to the actual situation and application scenarios, and the scope of the present disclosure is not limited in this regard.

If the solutions in this specification and embodiments involve personal information processing, the processing will be carried out on the premise that there is a legal basis (for example, the consent of the personal information subject is obtained, or it is necessary to perform a contract, etc.), and the processing will only be carried out within the scope of provisions or agreements. If a user refuses to process personal information other than the necessary information required for basic functions, it will not affect the user's use of the basic functions.

As mentioned above, with the increasing maturity of science and technology, the use of electronic devices has gradually become a daily habit of people. For example, a user may use an electronic device to play audio content, check the time, measure physiological data, and so on. In addition, people may also use electronic devices to perform interaction operations. However, the interaction operations supported by existing electronic devices only include some simple interaction operations, such as playing audio, switching audio, etc., which cannot meet the deeper interaction needs of users.

An embodiment of the present disclosure proposes a solution for image interaction applied at an electronic device. According to this solution, image data may be acquired, by an image acquisition unit equipped on the electronic device, during the electronic device is in a first mode, the image data including a plurality of images corresponding to a target time period; and in response to the electronic device exiting the first mode, output of record content generated by a pre-trained model based on the image data may be triggered in an output unit associated with the electronic device.

In this way, the embodiments of the present disclosure are capable of acquiring image data by the image acquisition unit equipped on the electronic device during the electronic device is in the first mode. Furthermore, the embodiments of the present disclosure are capable of triggering the output unit associated with the electronic device to output the record content generated based on the image data after the electronic device exits the first mode. In this way, the embodiments of the present disclosure are capable of recording and summarizing image content collected during the electronic device is in the first mode, and providing the record content to the user for viewing, which satisfies the user's viewing needs and recording needs. In addition, the embodiments of the present disclosure expand the interaction capability between the electronic device and the user, and satisfy the interaction needs of the user.

Various example implementations of this solution will be described in detail below in further conjunction with the drawings.

### Example Image Interaction System

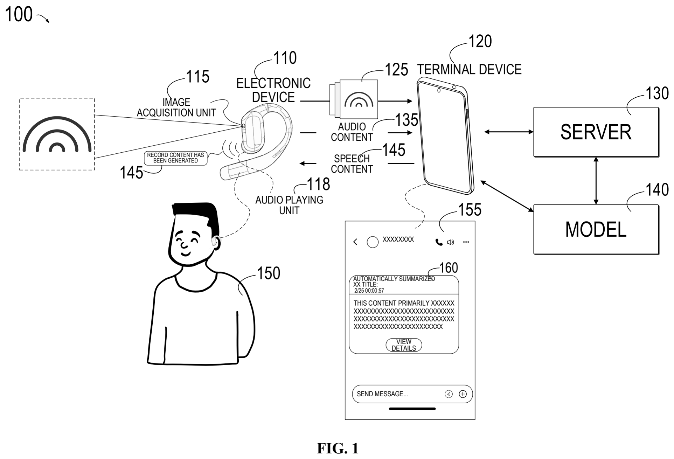

Fig. 1 illustrates a schematic diagram of an example image interaction system 100 according to an embodiment of the present disclosure. As shown in Fig. 1, the image interaction system 100 may include an electronic device 110 and a terminal device 120. A communication connection may be established between the electronic device 110 and the terminal device 120. As an example, the electronic device 110 may be connected to the terminal device 120 based on an appropriate wireless connection manner; alternatively, the electronic device 110, for example, may also establish a wired connection with the terminal device 120. For example, the communication connection may include, but is not limited to, a Bluetooth connection, a mobile network connection, a Universal Serial Bus (USB) connection, a Wireless Fidelity (Wi-Fi) connection, etc., and the embodiments of the present disclosure are not limited in this regard.

As shown in Fig. 1, the electronic device 110 may be equipped with one or more image acquisition units 115. For example, the image acquisition unit 115 may be implemented as a camera assembly (e.g., a camera).

As an example, the electronic device 110 may include, for example, a wearable device or other devices (e.g., a handheld device, etc.). For example, the wearable device may include a headphone device in an appropriate form, such as an in-ear headphone, an on-ear headphone, an over-ear headphone, and so on. The present disclosure is not intended to limit the form of the headphone device.

Additionally, the headphone device may be equipped with an image acquisition unit 115 (e.g., a camera) set at an appropriate position to support by the camera to take an image of the surroundings of a user 150 during the user 150 wears the headphone device.

In some examples, the headphone device, for example, may be equipped with a single camera or a plurality of cameras. For example, the left-ear headphone and the right-ear headphone may each be equipped with one camera. As another example, the headphone device may, for example, be only equipped with a single camera. For example, only the right-ear headphone is equipped with a camera, and the left-ear headphone may be not equipped with a camera.

In some other examples, the electronic device 110 may also be implemented in other appropriate forms. For example, the electronic device 110 may include a glasses device equipped with one or more cameras. For example, such a camera may be set at a frame or a temple of the glasses device.

In some embodiments, the electronic device 110 may be provided with an audio acquisition unit (e.g., a microphone) and an audio playing unit 118 (e.g., a speaker). Specifically, the electronic device 110 may use the audio acquisition unit to collect audio data, and may send the audio data (e.g., audio content 135) to the terminal device 120. Alternatively, the electronic device 110 may also use the audio playing unit 118 to play audio data (e.g., voice content 145) from the terminal device 120.

In some embodiments, the electronic device 110 may also be associated with a voice assistant application installed in the terminal device 120. For example, the user 150 may use the electronic device 110 to perform voice interaction with the voice assistant application. Additionally, as will be described below, the terminal device 120 may also provide a graphical interface of the voice assistant application to provide visual interaction information associated with the voice assistant application.

In some embodiments, the terminal device 120 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a Personal Digital Assistant (PDA), an audio/video player, a digital camera/video camera, a positioning device, a TV receiver, a radio broadcast receiver, an e-book device, a gaming device, or any combination thereof, including the accessories and peripherals of these devices or any combination thereof. In some embodiments, the terminal device 120 may also support any type of user-specific interface (such as "wearable" circuitry, etc.).

As shown in Fig. 1, the voice assistant application uses a pre-trained model 140 to interact with the user 150 in a variety of appropriate modalities. As an example, the pre-trained model 140 may be a language model or a generative model that supports multi-modal data processing.

In some embodiments, the pre-trained model 140 may be deployed at the terminal device 120. Alternatively, the pre-trained model 140 may also be deployed at a server 130. In the case that the pre-trained model 140 is deployed at the server 130, the terminal device 120 may call the model 140 via a communication connection with the server 130 to implement interaction in the voice assistant application. For example, the server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the voice assistant application in the terminal device 120.

In some embodiments, the electronic device 110 may have various working modes. Different working modes may be related to, for example, the working manner of the image acquisition unit 115 and the manner of processing image data collected by the image acquisition unit 115.

Taking the headphone device as an example, in the case that the headphone device is in a normal conversation mode, the image acquisition unit 115 will not be enabled by default, for example. The image acquisition unit 115 will be enabled only in response to an explicit instruction (e.g., taking a photo) of a user is received. Furthermore, in the case that the headphone device is in the normal conversation mode, the image data acquired by the image acquisition unit 115 will not be used to generate the record content.

As will be described in detail below, the electronic device 110 may also support running in a first mode. The first mode may support, for example, that the image acquisition unit 115 will be in a normally-on state, and in the first mode, the image acquisition unit 115 may collect the image data 125. In addition, in the first mode, the image data 125 acquired by the image acquisition unit 115 will be used to generate the record content.

For example, during a user wears the electronic device 110, the user may enable the first mode of the electronic device 110. The specific process of enabling the first mode will be described in detail below. For example, the user may trigger the electronic device 110 to enter the first mode through a voice instruction (e.g., "enable the first mode").

Correspondingly, during the first mode, the image acquisition unit 115 of the electronic device 110 may capture image data. The image data may include a plurality of images corresponding to a target time period. As an example, the target time period may correspond to a time period to which the plurality of images for generating the record content belongs (e.g., the first 2 hours during which the electronic device 110 is in the first mode). For example, during the headphone device worn by the user is in the first mode, the camera of the headphone device may capture images of the surroundings of the user.

As shown in Fig. 1, during the electronic device 110 is in the first mode, the image data 125 captured based on the image acquisition unit 115 may be sent to the terminal device 120 for generating the record content. Alternatively, in the first mode, audio data (e.g., audio content 135) acquired by the audio acquisition unit may also be sent to the terminal device 120 for generating the record content together with the image data 125.

After the electronic device 110 exits the first mode, the model 140 may generate the record content based on the plurality of images corresponding to the target time period in the image data 125. Specifically, the plurality of images corresponding to the target time period in the image data 125 may be provided to the model 140 to generate the record content. Alternatively, the audio content acquired by the audio acquisition unit may also be provided to the model 140, so that the model 140 generates the record content based on the audio content and the plurality of images corresponding to the target time period. The record content includes a text summary generated based on the plurality of images.

As an example, when the user stops wearing the electronic device 110, the user may exit the first mode of the electronic device 110. The specific process of exiting the first mode will be described in detail below. For example, the user may trigger the electronic device 110 to exit the first mode through a voice instruction (e.g., "exit the first mode").

Taking Fig. 1 as an example, the image interaction system 100 may trigger, in response to the electronic device 110 exiting the first mode, the output of the record content generated by the pre-trained model (e.g., the model 140) based on the image data 125 in the output unit associated with the electronic device 110. As an example, such an output unit may include, for example, an interactive interface and/or an audio playing unit (e.g., the audio playing unit 118 or an audio playing unit configured on the terminal device 120, e.g., a speaker) associated with the electronic device 110. For example, such an interactive interface may be provided by a screen display unit configured by the electronic device 110. Alternatively, such an interactive interface may also be provided by the terminal device 120 communicatively connected to the electronic device 110, for example, the interactive interface 155. For example, the terminal device 120 may present the record content 160 in the interactive interface 155. For example, the record content 160 may include a text summary generated based on the image data 125. Alternatively, the record content 160 may also include a recording time, title content generated based on the text summary, and so on.

Alternatively, the record content 160 may include an image-text summary generated based on the plurality of images. In the image-text summary, text content is associated with an image. As an example, such an image-text summary may include the image and the text content (e.g., description text) corresponding to the image. Such description text may be used to describe the image. For example, if the image includes a "rose", the description text corresponding to the image may include words associated with the "rose". Alternatively, such text content may be replying content for the image. For example, the text content may be a reply to the user's inquiry content about the image. For example, such inquiry content may include "What kind of flower is in front of me?" The text content may include reply content (e.g., "This is a rose") for the flower (e.g., "rose") in the image.

Furthermore, the terminal device 120 may send, in response to the record content 160 being generated, a voice reminder (e.g., voice content 145) to the electronic device 110 for reminding that the record content has been generated. The electronic device 110 may use the audio playing unit 118 to play the voice reminder (e.g., "The record content has been generated").

Therefore, in the first mode, the image interaction system 100 may acquire the image data by using the image acquisition unit 115 equipped on the electronic device 110. The image interaction system 100 may also acquire audio data by using the audio acquisition unit equipped on the electronic device 110. Furthermore, the image interaction system 100 may use the terminal device 120 to obtain the record content generated by the pre-trained model based on the image data and/or the audio data after the electronic device 110 exits the first mode. The image interaction system 100 may present the record content in the interface associated with the electronic device 110 by the terminal device 120. Therefore, the embodiments of the present disclosure are capable of generating the record content based on the image data and/or the audio data obtained by capturing with the electronic device 110, and outputting the record content in the output unit associated with the electronic device 110, so that data may be recorded and summarized for the user, the recording needs and viewing needs of the user may be satisfied, and the efficiency of recording content may be improved.

It should be understood that the structures and functions of elements in the image interaction system 100 are described for illustrative purposes only, without suggesting any limitation to the scope of the present disclosure.

A specific processing flow of the image interaction system 100 will be described in detail below with reference to the drawings.

### Example Image Interaction

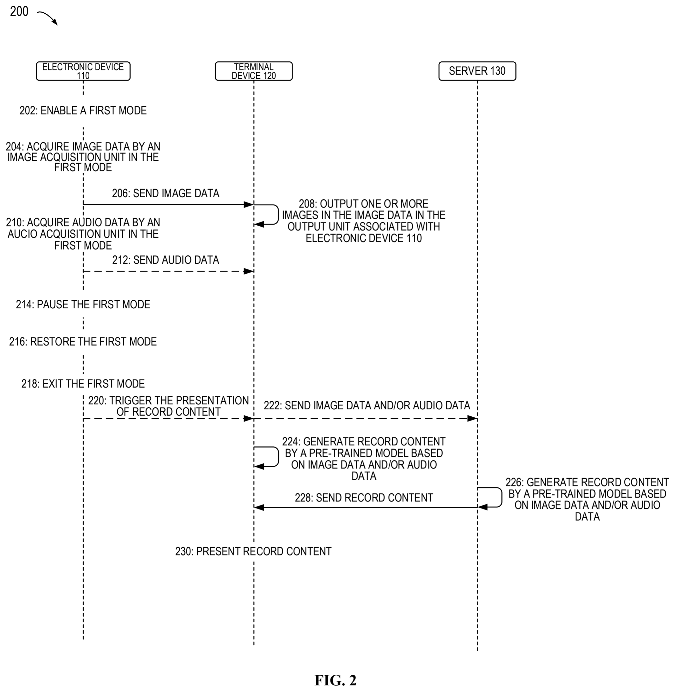

Fig. 2 illustrates a flowchart of an example process 200 for image interaction according to some embodiments of the present disclosure. The process 200 may be implemented at the electronic device 110, the terminal device 120, and/or the server 130. Alternatively, the process 200 may also be implemented in the image interaction system 100 including the electronic device 110 and the terminal device 120 that are in wireless communication. The process 200 will be described below with reference to Fig. 1.

As shown in Fig. 2, the electronic device 110 may enable (202) a first mode. As an example, the first mode may be that the image acquisition unit 115 of the electronic device 110 is set to be normally on, and image data acquired by the image acquisition unit 115 is configured to generate record content. Alternatively, the electronic device 110 may also include a second mode (e.g., a normal conversation mode). For example, the second mode may indicate that the image acquisition unit 115 of the electronic device 110 is not enabled by default. The image acquisition unit 115 will be enabled only in response to an explicit instruction (e.g., "taking a photo") of a user being received, and the image data acquired by the image acquisition unit 115 is not used to generate the record content.

The mode of the electronic device 110 may be determined based on a configuration operation of the user 150. Alternatively, the electronic device 110 may also switch the mode (e.g., switch from the first mode to the second mode) of the electronic device in response to a preset operation (e.g., a voice instruction (e.g., "switch to the second mode"), etc.) of the user.

As an example, the first mode of the electronic device 110 may be enabled (or referred to as woken up) in response to an enabling request of the user 150. As an example, such an enabling request may include, for example, a voice instruction (e.g., also referred to as a first voice instruction) received via an audio acquisition unit of the electronic device 110. As an example, the first voice instruction may include, for example, a preset keyword (e.g., "enable the first mode", "start a conversation", etc.). The present disclosure is not intended to limit the specific content of the preset keyword. In this way, the embodiments of the present disclosure may support the user to quickly enable the first mode of the electronic device 110 based on the voice instruction, thereby improving the interaction efficiency between the user and the electronic device.

Alternatively, the electronic device 110 may be associated with a voice assistant application. As an example, the voice assistant application may be installed in the terminal device 120. The electronic device 110 may receive a voice instruction (e.g., voice content associated with a preset keyword (e.g., "enable the first mode")) of the user 150 in a conversation with the voice assistant application. For example, the user 150 may have a conversation with a voice assistant based on the voice assistant application. The electronic device 110 may enable the first mode of the electronic device 110 in response to receiving an end request of the conversation. Alternatively, the electronic device 110 may enable the first mode of the electronic device 110 in response to no voice message being received in the conversation with the voice assistant application within a preset time period (e.g., 2 minutes). In this way, the embodiments of the present disclosure may support the user to enable the first mode of the electronic device through the conversation with the voice assistant application. Furthermore, the embodiments of the present disclosure are capable of supporting enabling the first mode of the electronic device 110 after the conversation with the voice assistant application ends, which effectively avoids a conflict between the process of the electronic device 110 in the first mode receiving voice content and the conversation process between the user and the voice assistant application, and ensures the quality of interaction between the user 150 and the electronic device 110 and between the user 150 and the voice assistant application.

As an example, the voice assistant may include any appropriate processing entity that supports interaction by means of prompt items and the like. In some scenarios, the voice assistant may include, but is not limited to, an agent or other assistants that support interaction through conversations (e.g., text conversations or voice conversations, etc.). It should be understood that, on the one hand, the voice assistant may have a virtual image for interaction. On the other hand, the voice assistant may also use an appropriate model to drive its interaction behavior, and such a model may include any appropriate machine learning model, such as a generative model. The present disclosure is not intended to limit the specific construction manner of the voice assistant.

Alternatively, such an enabling request may include, for example, an enabling operation received via an interactive interface associated with the electronic device 110. Such an interactive interface may be provided, for example, by the terminal device 120 communicating with the electronic device 110.

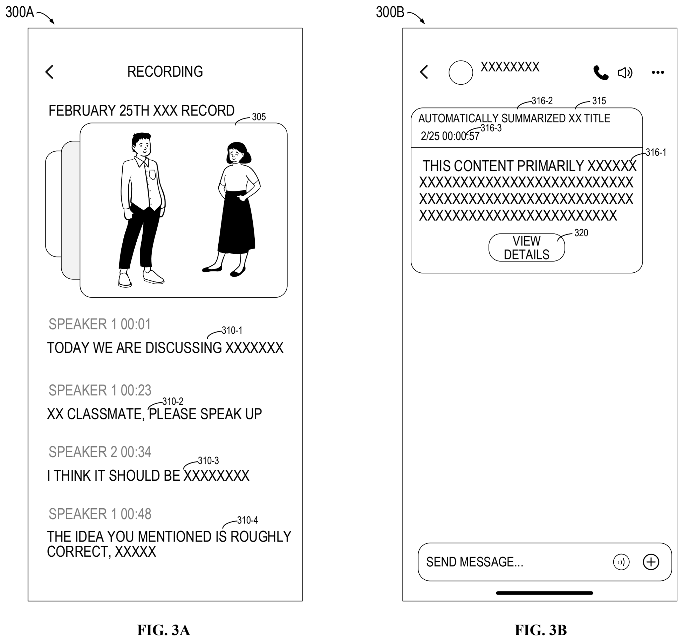

The process 200 will be illustratively described below based on Fig. 3A and Fig. 3B. It should be understood that Fig. 3A, Fig. 3B and the corresponding embodiments are only used for illustrative purposes, and are not used to limit the protection scope of the present disclosure.

Fig. 3A and Fig. 3B illustrate an example interface 300A and an example interface 300B according to some embodiments of the present disclosure. The interface 300A and the interface 300B may be provided, for example, by the terminal device 120 shown in Fig. 1.

In some embodiments, as shown in Fig. 3A, the terminal device 120 may present the interactive interface 300A. Alternatively, the terminal device 120 may trigger the electronic device 110 to enable the first mode in response to receiving a enabling operation of the user 150 in the interactive interface 300A. Alternatively, such a enabling operation may also include triggering (e.g., a click operation) of a control (not shown) associated with the first mode in the interactive interface 300A.

As an example, the interactive interface 300A may include a chat interface between the user 150 and the voice assistant application (or referred to as a graphical interface of the voice assistant application). The user 150 may interact with a voice assistant through the interactive interface 300A in the form of text, voice, video, or triggering of an interactive control. Furthermore, the voice assistant may respond to the user's interaction behavior. For example, the voice assistant may generate a chat message or perform a corresponding action (e.g., invoke another application (such as playing music, etc.)) for the user's interaction behavior. Furthermore, the terminal device 120 may present the chat message generated by the voice assistant in the interactive interface 300A. For example, the form of the chat message may include a text form, an audio form, or an image form (including picture content and video content). Alternatively, the terminal device 120 may trigger the electronic device 110 to enable the first mode in response to receiving the turn-on operation from the user 150 in the interactive interface 300A. For example, such a turn-on operation may include a chat message (e.g., "enable the first mode", etc.) containing a preset keyword sent by the user 150 to the voice assistant.

Alternatively, the electronic device 110 may also enable the first mode in response to the user 150 touching or pressing a physical button on the electronic device 110. Alternatively, the electronic device 1110 may also enable the first mode in response to the user 150 touching or pressing a physical button on the terminal device 120 communicating with the electronic device 110.

Alternatively, the electronic device 110 further includes a mode reminding unit. The electronic device 110 may use the mode reminding unit to provide a reminder signal indicating that the electronic device 110 is in the first mode. For example, such a mode reminding unit may be implemented as an LED indicator. The reminder signal indicating that the electronic device 110 is in the first mode may include, for example, the LED indicator being presented in a first color (e.g., green). Alternatively, the reminder signal indicating that the electronic device 110 is not in the first mode may include, for example, the LED indicator being off or being presented in a second color (e.g., red) different from the first color.

In some embodiments, with continued reference to Fig. 2, the electronic device 110 may capture (204) image data using the image acquisition unit 115 during the electronic device 110 is in the first mode. The image data includes a plurality of images corresponding to a target time period. For example, the target time period may indicate a time period to which the plurality of images for generating the record content belongs (e.g., the first 2 hours after the electronic device 110 enters the first mode).

Alternatively, the electronic device 110 may use the image acquisition unit 115 to periodically capture the plurality of images. For example, the image acquisition unit 115 may capture one image every 2 seconds. Alternatively, the electronic device 110 may use the image acquisition unit 115 to capture video content corresponding to the target time period. The video content may include a plurality of video frames corresponding to the target time period (e.g., 2 hours). In this way, according to the embodiments of the present disclosure, images (e.g., picture content) may be captured periodically or the video content corresponding to the target time period may be captured, which may satisfy diverse capturing needs of the user and improve the efficiency of the user obtaining images.

As an example, the electronic device 110 may determine, based on configuration information (also referred to as second configuration information) associated with the first mode, a time interval for capturing the plurality of images and/or a duration of the target time period. As an example, such second configuration information may be determined, for example, based on a user operation (e.g., a voice instruction or a selection of a related control, etc.). For example, the time interval for the electronic device 110 to take the plurality of images may be, for example, every 1 second, every 2 seconds, and so on. The duration of the target time period may indicate, for example, the duration for capturing dynamic image content (e.g., video content). Alternatively, the duration of the target time period may indicate the duration of the time period to which the plurality of images for generating the record content belong. For example, the duration may include 2 hours, 3 hours, etc. The present disclosure is not intended to limit the specific values of the time period and the duration.

Alternatively, the electronic device 110 may determine a resolution associated with the first mode. Furthermore, the electronic device 110 may acquire at least a portion of the image data based on the resolution. As an example, the electronic device 110 may determine the resolution based on configuration information (also referred to as first configuration information) associated with the first mode. For example, the configuration information associated with the first mode includes preset configuration information or configuration information determined by a configuration operation of the user 150. As an example, the images may include picture content and/or video content. For example, for capturing video content, the resolution associated with the first mode may be, for example, a first resolution (e.g., 720P). For capturing picture content, the resolution associated with the first mode may be, for example, a second resolution (e.g., 1280 × 720 pixels).

Alternatively, the electronic device 110 may also determine the resolution based on a voice instruction (e.g., also referred to as a fourth voice instruction) of the user 150. For example, the electronic device 110 may update the resolution (e.g., adjust the resolution of capturing picture from 1280 × 720 pixels to 1920 × 1080 pixels) in response to receiving a first voice instruction (e.g., "take a clearer picture") of the user.

In some embodiments, the electronic device 110 is a headphone device or a glasses device equipped with at least one camera. In this way, the embodiments of the present disclosure may satisfy the visual interaction needs of the user by equipping the camera on the headphone device or the glasses device.

In some embodiments, the electronic device 110 may include a plurality of image acquisition units (e.g., cameras). The plurality of image acquisition units may include, for example, the image acquisition unit 115. Taking the electronic device 110 as a headphone device for an example. The headphone device may include a left-ear headphone (or referred to as a first device) or a right-ear headphone (or referred to as a second device). The left-ear headphone and the right-ear headphone may each be equipped with at least one image acquisition unit (e.g., a camera). The electronic device 110 may use a target image acquisition unit of the plurality of image acquisition units to take all the image data. For example, the target image acquisition unit is determined based on configuration information (also referred to as third configuration information) associated with the first mode. For example, such configuration information may indicate that during the electronic device 110 is in the first mode, an image acquisition unit associated with the left-ear headphone is used as the target image acquisition unit in a first time period (e.g., the first half hour during which the electronic device 110 is in the first mode), and an image acquisition unit associated with the right-ear headphone is used as the target image acquisition unit in a second time period (e.g., after the electronic device 110 has been in the first mode for half an hour).

Alternatively, the target image acquisition unit may also be determined based on a wearing state of the electronic device 110. For example, the electronic device 110 may use an image acquisition unit equipped on the left-ear headphone as the target image acquisition unit in response to the user 150 only wearing a first device (e.g., the left-ear headphone) of the electronic device 110 (e.g., the headphone device).

In some embodiments, the electronic device 110 may periodically capture a first set of images using a first image acquisition unit of the plurality of image acquisition units during a first round of conversation. Furthermore, the electronic device 110 may periodically capture a second set of images using a second image acquisition unit of the plurality of image acquisition units during a second round of conversation after the first round of conversation ends. The second image acquisition unit is different from the first image acquisition unit. For example, taking the electronic device 110 as the headphone device for an example. The electronic device 110 may periodically capture the first set of images using an image acquisition unit (e.g., the first image acquisition unit) equipped on the left-ear headphone during the first round of conversation, and periodically take the second set of images using an image acquisition unit (e.g., the second image acquisition unit) equipped on the right-ear headphone during the second round of conversation after the first round of conversation ends. In this way, the embodiments of the present disclosure are capable of using the same image acquisition unit to capture images in the same round of conversation, which ensures the stability of taking images during the same round of conversation, and ensures the quality and relevance of the captured images. Furthermore, according to the embodiments of the present disclosure, different image acquisition units are used to capture images in different rounds of conversation, and by rotating the image acquisition units, problems such as performance degradation or insufficient power caused by long-time operation of an image acquisition unit may be avoided, thereby ensuring the stability and reliability of capturing images.

In some embodiments, the electronic device 110 may send (206) (or referred to as transmit) the image data obtained by capturing based on the image acquisition unit 115 to the terminal device 120. For example, the electronic device 110 may transmit the image data to the terminal device 120 in real time in response to receiving the image data obtained by capturing by the image acquisition unit. Alternatively, in the case that the transmission speed is slower than the capturing speed, the electronic device 110 may store the image data into a buffer unit, so as to send the image data in the buffer unit to the terminal device 120 in turn. As an example, the terminal device 120 may obtain the image data from the electronic device 110 in wireless communication with the terminal device 120. In this way, the embodiments of the present disclosure are capable of transmitting the image data obtained by capturing by the electronic device to the terminal device in advance in real time. In this way, the embodiments of the present disclosure improve the efficiency of the image data, shorten the waiting time of the user, and satisfy the interaction needs of the user.

In some embodiments, the electronic device 110 may trigger, within the target time period, the output of image content captured by the electronic device 110 in the output unit associated with the electronic device 110. For example, as shown in Fig. 2, the terminal device 120 may output (208) the image data in the output unit associated with the electronic device 110. For example, the output unit associated with the electronic device 110 may include an interactive interface. Such an interactive interface may be provided by a screen display unit configured on the electronic device 110. Alternatively, such an interactive interface may be provided by the terminal device 120 communicatively connected to the electronic device 110. For example, as shown in Fig. 3A, the terminal device 120 may present a first image 305 in the image data in the interactive interface 300A. Additionally, the terminal device 120 may superimpose and present a second image on the first image in response to receiving the second image in the image data. For example, the terminal device 120 may present a newly received image on an original image in a superimposition manner in the interactive interface 300A.

In some embodiments, the image data obtained by capturing by the electronic device 110 and/or the context information associated with the plurality of images are automatically deleted after a preset duration (e.g., 2 hours). In this way, the privacy of the user may be effectively protected, and the device storage space of the electronic device 110 or the terminal device 120 of the user may be saved.

Additionally, or alternatively, the terminal device 120 (or the server 130) may delete, in response to reaching the preset duration (e.g., 2 hours), the plurality of images and/or the context information associated with the plurality of images that are obtained from the electronic device 110 and stored at the terminal device 120 (or the server 130) or the pre-trained model.

In some embodiments, with continued reference to Fig. 2, the electronic device 110 may acquire (210) audio data using an audio acquisition unit equipped on the electronic device 110 during the electronic device 110 is in the first mode. The electronic device 110 may send (212) the audio data to the terminal device 120. Furthermore, the electronic device 110 may trigger, within the target time period, the output of text content corresponding to the audio data (or referred to as audio content) acquired by the audio acquisition unit equipped on the electronic device 110 in the output unit (e.g., the interactive interface). Such audio content may include, for example, voice content of the user 150 or audio content in the surroundings of the user 150. For example, as shown in Fig. 3A, the terminal device 120 may display a plurality of pieces of text content corresponding to audio content of a plurality of speakers in the interactive interface 300A. For example, in a chat scenario, such text content may include a plurality of pieces of text content (e.g., text content 310-1, text content 310-2, text content 310-, and text content 310-4, etc.) corresponding to voice content of the plurality of speakers. Alternatively, the terminal device 120 may also present, in the interactive interface 300A, speaker information (e.g., speaker 1) and/or time information (e.g., 00:01) corresponding to the text content (e.g., the text content 310-1). Furthermore, the terminal device 120 may present, in response to receiving new text content corresponding to audio data, the new text content corresponding to the audio data under the text content 310-4, so as to implement the function of real-time presentation of the text content.

In some embodiments, with continued reference to Fig. 2, the electronic device 110 may pause (214) the first mode. As an example, during the electronic device 110 is in the first mode, the electronic device 110 may pause the first mode in response to a pause condition, so as to stop acquiring the image data.

As an example, such a pause condition may include, for example, that the wearing state of the electronic device 110 (e.g., a wearable device) does not satisfy a preset condition. For example, at least one device (e.g., a left-ear headphone or a right-ear headphone in the headphone device) of the electronic device 110 is taken off, so that the electronic device 110 is not worn by the user 150.

As an example, such a pause condition may include, for example, a voice instruction (also referred to as a third voice instruction) received via the audio acquisition unit of the electronic device 110. Such voice instruction may include a preset keyword (e.g., "pause the first mode", etc.) associated with pausing the first mode.

As an example, such a pause condition may include, for example, that the electronic device 110 is triggered to provide audio content associated with the connected the terminal device 120. For example, such audio content may include, for example, a ringtone of a phone or a video call (e.g., receiving an incoming call). Such audio content may also include, for example, an alarm clock.

As an example, such a pause condition may include, for example, that the degree of occlusion of the image acquisition unit 115 is greater than a preset degree (e.g., 50%). For example, in the case that the degree of occlusion of the image acquisition unit 115 of the electronic device 110 is greater than 50%, the first mode of the electronic device 110 is exited to remind the user 150 that the image acquisition unit 115 is occluded.

In some embodiments, such a pause condition may also include that the power of the electronic device 110 is lower than a threshold (e.g., also referred to as a second threshold, e.g., 5%), the communication connection between the electronic device 110 and the terminal device 120 is disconnected, and/or the network connection of the terminal device 120 is disconnected.

Alternatively, the electronic device 110 may resume (216) the first mode in response to the pause condition no longer being satisfied. For example, the electronic device 110 may resume the first mode in response to the end of a phone, a video call, an alarm clock, etc. For example, the electronic device 110 may resume the first mode in response to the wearing state of the electronic device 110 satisfying a preset condition (e.g., at least one device in the electronic device 110 being in a worn state). For example, the electronic device 110 may resume the first mode in response to receiving a voice instruction (e.g., a voice instruction associated with resuming the first mode, e.g., "resume the first mode") of the user. For example, the electronic device 110 may resume the first mode in response to the degree of occlusion of the image acquisition unit 115 being less than a preset degree (e.g., 50%).

In some embodiments, with continued reference to Fig. 2, the electronic device 110 may exit (218) the first mode. For example, the electronic device 110 may exit the first mode in response to the power of the electronic device 110 being lower than a threshold (e.g., also referred to as a first threshold, e.g., 5%). Alternatively, the electronic device 110 may exit the first mode in response to the wearing state of the electronic device 110 (e.g., the user 150 stops wearing the electronic device 110 (e.g., takes off the headphone device)). Alternatively, the electronic device 110 may exit the first mode in response to a voice instruction (also referred to as a second voice instruction) received via the audio acquisition unit. For example, such a second voice instruction may be associated with a preset keyword (e.g., "exit the first mode", "turn off the first mode", etc.).

In some embodiments, the electronic device 110 may also trigger, in response to exiting the first mode, the presentation of the record content generated based on the image data in the interactive interface associated with the electronic device 110. With continued reference to Fig. 2, the electronic device 110 may trigger (220) the terminal device 120 to present the record content in response to exiting the first mode. The process of generating the record content is illustratively described below.

In some embodiments, the image data obtained by capturing by the electronic device 110 using the carried image acquisition unit 115 may be provided to the pre-trained model (e.g., the model 140), so that the pre-trained model generates the record content based on the image data. Alternatively, audio data (or referred to as audio content) acquired by the electronic device 110 using the carried audio acquisition unit may be provided to the pre-trained model (e.g., the model 140), so that the pre-trained model jointly generates the record content based on the image data and the audio data. The deployment of the pre-trained model may be divided into three types: the pre-trained model is deployed at the electronic device 110, the pre-trained model is deployed at the terminal device 120, or the pre-trained model is deployed at the server 130. Illustrative descriptions will be given below for different model deployment locations.

In the first type, when the electronic device 110 is deployed with the pre-trained model (e.g., the model 140), the electronic device 110 may directly provide the image data and/or the audio data (or text data corresponding to the audio data) to the pre-trained model. The electronic device 110 may use the pre-trained model to generate the record content based on the image data and/or the audio data (or the text data corresponding to the audio data). Furthermore, the electronic device 110 may send the record content generated based on the pre-trained model deployed at the electronic device 110 to the terminal device 120, so that the terminal device 120 or the electronic device 110 outputs the record content in the output unit associated with the electronic device 110.

In the second type, the electronic device 110 is not deployed with the pre-trained model, and the terminal device 120 is deployed with the pre-trained model. The electronic device 110 may send (206) the image data to the terminal device 120. The electronic device 110 may send (212) the audio data (or the text data corresponding to the audio data) to the terminal device 120. The terminal device 120 may provide the image data and/or the audio data (or the text data corresponding to the audio data) to the pre-trained model deployed at the terminal device 120. The terminal device 120 may use (224) the pre-trained model to generate the record content based on the image data and/or the audio data (or the text data corresponding to the audio data).

In the third type, neither the electronic device 110 nor the terminal device 120 is deployed with the pre-trained model, and the server 130 is deployed with the pre-trained model. The terminal device 120 may receive the image data and/or the audio data from the electronic device 110, and send (222) the image data and/or the audio data (or the text data corresponding to the audio data) to the server 130 communicating with the terminal device 120. Furthermore, the server 130 may provide the image data and/or the audio data (or the text data corresponding to the audio data) to the pre-trained model deployed at the server 130. The server 130 may use (226) the pre-trained model to generate the record content based on the image data and/or the audio data (or the text data corresponding to the audio data). Furthermore, the server 130 may send (228) the record content to the terminal device 120.

As an example, the terminal device 120 may present (230) the record content in the interactive interface associated with the electronic device 110. For example, as shown in Fig. 3B, the terminal device 120 may present the record content 315 in the interactive interface 300B. In some embodiments, the record content 315 may include a text summary (e.g., text content 316-1) generated based on the plurality of images corresponding to the target time period in the image data. In this way, the embodiments of the present disclosure are capable of generating the text summary based on the image data collected by the electronic device 110 and presenting the text summary in the interactive interface associated with the electronic device 110, so that the needs of the user for summarizing and recording may be satisfied, the time of the user for summarizing and recording may be saved, and the efficiency of the user for obtaining information may be improved. Alternatively, the record content 315 may also include title content 316-2 generated based on the text summary and date and time information 316-3 associated with the record content 315. Alternatively, the record content 315 may also include image data based on the image acquisition unit of the electronic device 110.

As an example, the terminal device 120 may present at least a portion of the record content 315 in the interactive interface 300B. The terminal device 120 may provide a control 320 in the interactive interface 300B. Furthermore, the terminal device 120 may present the complete content of the record content 315 in response to triggering (e.g., a click operation) of the control 320.

Based on the process described above, the embodiments of the present disclosure are capable of acquiring image data using the image acquisition unit equipped on the electronic device during the electronic device is in the first mode. Furthermore, the embodiments of the present disclosure are capable of triggering the output of the record content generated based on the image data in the output unit associated with the electronic device after the electronic device exits the first mode. In this way, the embodiments of the present disclosure are capable of recording and summarizing image content captured during the electronic device is in the first mode, and providing the record content to the user for viewing, which satisfies the user's viewing needs and recording needs. In addition, the embodiments of the present disclosure expand the interaction capability between the electronic device and the user, and satisfy the interaction needs of the user.

### Example Process

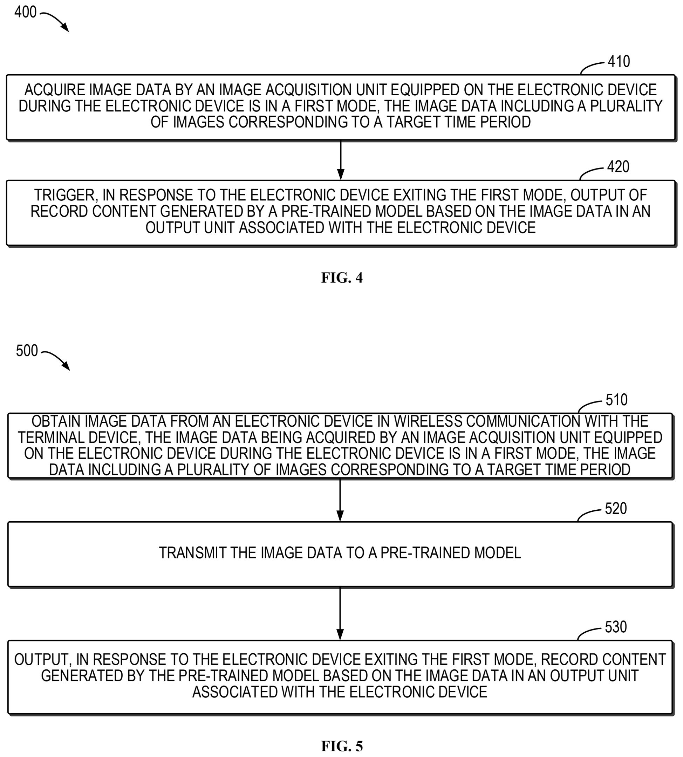

Fig. 4 illustrates a flowchart of an example process 400 for image interaction according to some embodiments of the present disclosure. The process 400 may be implemented at the electronic device 110. The process 400 will be described below with reference to Fig. 1.

As shown in Fig. 4, at block 410, the electronic device 110 acquires, during the electronic device 110 is in a first mode, image data using an image acquisition unit equipped on the electronic device 110, the image data including a plurality of images corresponding to a target time period.

At block 420, the electronic device 110 triggers, in response to the electronic device 110 exiting the first mode, output of record content generated by a pre-trained model based on the image data in an output unit associated with the electronic device 110.

In some embodiments, the process 400 further includes: acquiring, using an audio acquisition unit equipped on the electronic device 110, audio data during the electronic device 110 is in the first mode, the record content being further generated based on the audio data.

In this way, the embodiments of the present disclosure are capable of generating the record content based on the audio data, thereby enriching the record content and satisfying the user's need for recording data.

In some embodiments, the output unit associated with the electronic device 110 includes an interactive interface, and the process 400 further includes: triggering, in the interactive interface, presentation of image content captured by the electronic device 110 within the target time period; and/or triggering, in the interactive interface, presentation of text content corresponding to audio data acquired by the electronic device 110 within the target time period.

In this way, the embodiments of the present disclosure are capable of presenting the image content or the text content corresponding to the audio content in the interface associated with the electronic device, so that the viewing needs of the user may be satisfied, and the viewing efficiency of the user may be improved.

In some embodiments, the acquiring image data by the image acquisition unit equipped on the electronic device 110 includes: periodically capturing the plurality of images, using the image acquisition unit,; or capturing video content corresponding to the target time period using the image acquisition unit, the video content including a plurality of video frames corresponding to the target time period.

In this way, the embodiments of the present disclosure are capable of periodically capturing images or capturing video content, so that the diverse needs of the user may be satisfied, and the recording efficiency of the user may be improved.

In some embodiments, the electronic device 110 is in wireless communication with the terminal device 120, and the record content is generated through: sending, by the electronic device 110, the image data to the terminal device 120; providing, by the terminal device 120, the image data to the pre-trained model; and generating, by the pre-trained model, the record content based on the image data, wherein the pre-trained model is deployed on the terminal device 120 or a server 130 communicating with the terminal device.

In this way, the embodiments of the present disclosure are capable of using the pre-trained model to generate the corresponding record content based on the image data, so that the recording needs of the user may be satisfied.

In some embodiments, the generating, by the pre-trained model, the record content based on the image data further includes: acquiring audio data, using an audio acquisition unit equipped on the electronic device 110; sending, by the electronic device 110, the audio data to the terminal device 120; providing, by the terminal device 120, the audio data to the pre-trained model; and generating, by the pre-trained model, the record content based on the image data and the audio data.

In this way, the embodiments of the present disclosure are capable of supporting the generation of the record content based on the audio data, thereby enriching the record content and satisfying the user's need for recording data.

In some embodiments, the record content includes a text summary generated based on the plurality of images; or the record content includes an image-text summary generated based on the plurality of images, where in the image-text summary, text content is associated with the images.

In this way, the embodiments of the present disclosure are capable of generating the text summary or the image-text summary based on the plurality of images, so that the efficiency of the user for obtaining information may be improved, and the needs of the user may be satisfied.

In some embodiments, the acquiring the image data by the image acquisition unit equipped on the electronic device 110 includes: determining a resolution associated with the first mode, and acquiring at least a portion of the image data based on the resolution; and/or determining a time interval period for capturing the plurality of images and/or a duration of the target time period.

In this way, images may be captured based on the configured resolution, and the stability of image quality is ensured. In addition, the embodiments of the present disclosure are capable of supporting the determination of the time period and/or the duration for capturing the plurality of images, so that the needs of the user for capturing images with different time periods and/or duration may be satisfied.

In some embodiments, the first mode is enabled in response to an enabling request of a user, and the enabling request includes: an enabling operation received via an interactive interface associated with the electronic device 110; or a first voice instruction received via an audio acquisition unit of the electronic device 110.

In this way, the embodiments of the present disclosure are capable of providing the user with various enabling operations for enabling the first mode, thereby improving the efficiency of the user for enabling the first mode of the electronic device.

In some embodiments, the process 400 further includes: exiting the first mode in response to the power of the electronic device 110 being lower than a first threshold; or exiting the first mode in response to a second voice instruction received via the audio acquisition unit of the electronic device 110.

In this way, the embodiments of the present disclosure are capable of exiting the electronic device from the first mode when the preset condition is satisfied, so that the needs of the user may be satisfied, and the stability of the function provided during the electronic device is in the first mode is ensured.

In some embodiments, the process 400 further includes: pausing, during the electronic device 110 being in the first mode, the first mode in response to a pause condition being satisfied, to stop acquiring the image data, the pause condition including at least one of: the electronic device 110 including a wearable device with a wearing state not satisfying a predetermined condition; the power of the electronic device 110 being lower than a second threshold; a third voice instruction received via the audio acquisition unit of the electronic device 110; the electronic device 110 being triggered to provide audio content associated with the connected the terminal device 120; or the degree of occlusion of the image acquisition unit being greater than a predetermined degree.

In this way, the embodiments of the present disclosure are capable of pausing the first mode of the electronic device when the pause condition is satisfied, so that the needs of the user may be satisfied, and the stability of the function provided during the electronic device is in the first mode and the normal operation of other applications may be ensured.

In some embodiments, the process 400 further includes: playing a voice reminder using an audio playing unit of the electronic device 110 in response to the record content being generated.

In this way, the embodiments of the present disclosure are capable of reminding the user that the record has been generated, which facilitates the user to view the record content as soon as possible, and improves the viewing efficiency of the user.

In some embodiments, the electronic device 110 includes a wearable device.

In this way, the embodiments of the present disclosure are capable of improving the interaction efficiency between the user and the wearable device.

In some embodiments, the wearable device is a headphone device or a glasses device equipped with at least one camera.

As such, the embodiments of the present disclosure are capable of satisfying the visual interaction needs of the user by equipping the camera on the headphone device or the glasses device.

In some embodiments, the electronic device 110 further includes a mode reminding unit, and the process 400 further includes: providing, using the mode reminding unit, a reminder signal indicating that the electronic device 110 is in the first mode.

In this way, the embodiments of the present disclosure are capable of enabling the current user and other users to clearly confirm whether the electronic device 110 is in the first mode based on the reminder signal, thereby satisfying the needs of the user.

Fig. 5 illustrates a flowchart of an example process 500 for image interaction according to some embodiments of the present disclosure. The process 500 may be implemented at the terminal device 120. The process 500 will be described below with reference to Fig. 1.

As shown in Fig. 5, at block 510, the terminal device 120 obtains image data from an electronic device 110 in wireless communication with the terminal device 120, the image data being acquired by an image acquisition unit equipped on the electronic device 110 during the electronic device is in a first mode, the image data including a plurality of images corresponding to a target time period.

At block 520, the terminal device 120 transmits the image data to a pre-trained model.

At block 530, the terminal device 120 outputs, in response to the electronic device 110 exiting the first mode, record content generated by the pre-trained model based on the image data in an output unit associated with the electronic device 110.

In some embodiments, the process 500 further includes: receiving, audio data from the electronic device 110 and within the target time period, audio data being acquired using an audio acquisition unit equipped on the electronic device 110; and transmitting, the audio data or text data corresponding to the audio data to the pre-trained model for generating the record content.

In this way, the embodiments of the present disclosure are capable of generating the record content based on the audio data, thereby satisfying the recording needs of the user.

In some embodiments, the output unit associated with the electronic device 110 includes an interactive interface, and the process 500 further includes: presenting, within the target time period, image content captured by the electronic device 110 in the interactive interface; and/or presenting, within the target time period, text content corresponding to audio data acquired by the electronic device 110 in the interactive interface.

In this way, the embodiments of the present disclosure are capable of presenting the captured image content and/or the text content corresponding to the audio content in the interactive interface, so that the viewing needs of the user may be satisfied.

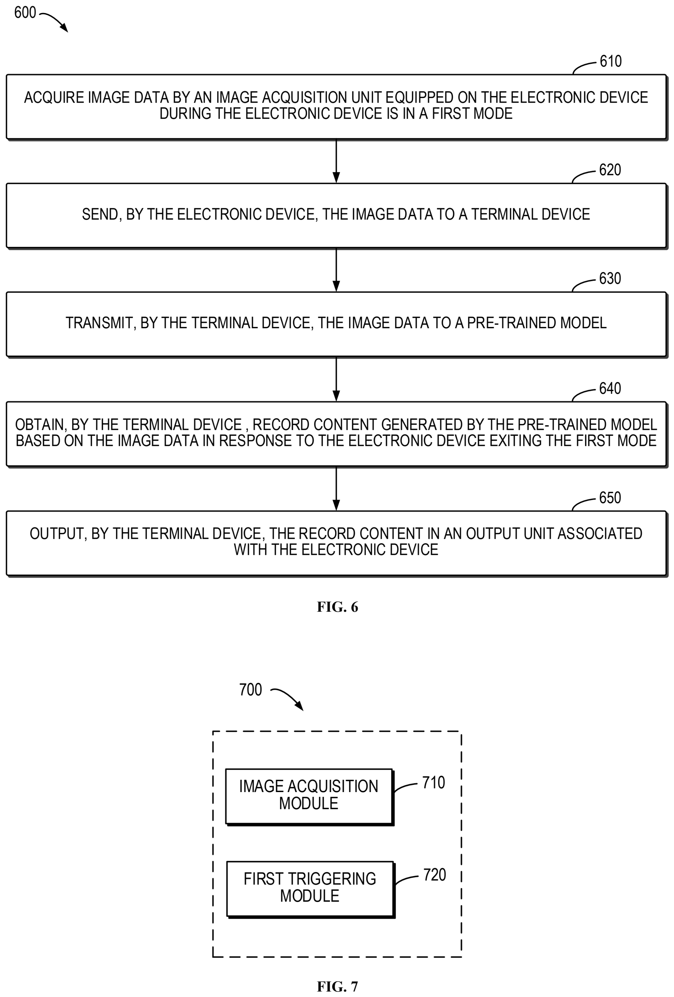

Fig. 6 illustrates a flowchart of an example process 600 for image interaction according to some embodiments of the present disclosure. The process 600 may be implemented in the image interaction system 100. The image interaction system 100 includes an electronic device 110 and a terminal device 120 in wireless communication. The process 600 will be described below with reference to Fig. 1.

As shown in Fig. 6, at block 610, the image interaction system 100 acquires using an image acquisition unit equipped on the electronic device 110 during the electronic device 110 is in a first mode.

At block 620, the image interaction system 100 sends, by the electronic device 110, the image data to the terminal device 120.

At block 630, the image interaction system 100 transmits, by the terminal device 120, the image data to a pre-trained model.

At block 640, the image interaction system 100 obtains, by the terminal device and in response to the electronic device exiting the first mode, record content generated by the pre-trained model based on the image data.

At block 650, the image interaction system 100 outputs, by the terminal device 120, the record content in an output unit associated with the electronic device 110.

### Example Apparatus and Device

The embodiments of the present disclosure further provide corresponding apparatuses for implementing the above methods or processes.

Fig. 7 illustrates a schematic structural block diagram of an example apparatus 700 for image interaction according to some embodiments of the present disclosure. The apparatus 700 may be implemented as or included in the electronic device 110. Each module/component in the apparatus 700 may be implemented by hardware, software, firmware, or any combination thereof.

As shown in Fig. 7, the apparatus 700 includes: an image acquisition module 710 configured to acquire, using an image acquisition unit equipped on the electronic device 110, image data during the electronic device 110 is in a first mode, the image data including a plurality of images corresponding to a target time period; and a first triggering module 720 configured to trigger, in response to the electronic device 110 exiting the first mode, output of record content generated by a pre-trained model based on the image data in an output unit associated with the electronic device 110.

In some embodiments, the apparatus 700 further includes an audio acquisition module configured to: acquire, using an audio acquisition unit equipped on the electronic device 110, audio data during the electronic device 110 is in the first mode, the record content being further generated based on the audio data.

In some embodiments, the output unit associated with the electronic device 110 includes an interactive interface, and the apparatus 700 further includes a third triggering module configured to: trigger, in the interactive interface , presentation of image content acquired by the electronic device 110 within the target time period; and/or trigger, in the interactive interface, presentation of text content corresponding to audio content acquired by the electronic device 110 within the target time period.

In some embodiments, the image collecting module 710 is further configured to: periodically capture the plurality of images using the image acquisition unit,; or capture video content corresponding to the target time period using the image acquisition unit, the video content including a plurality of video frames corresponding to the target time period.

In some embodiments, the electronic device 110 is in wireless communication with the terminal device 120, and the record content is generated based on a process including: sending, by the electronic device 110, the image data to the terminal device 120; providing, by the terminal device 120, the image data to the pre-trained model; and generating, by the pre-trained model, the record content based on the image data, wherein the pre-trained model is deployed on the terminal device 120 or a server 130 communicating with the terminal device.

In some embodiments, the generating, by the pre-trained model, the record content based on the image data further includes: acquiring audio data using an audio acquisition unit equipped on the electronic device 110; sending, by the electronic device 110, the audio data to the terminal device 120; providing, by the terminal device 120, the audio data to the pre-trained model; and generating, by the pre-trained model, the record content based on the image data and the audio data.

In some embodiments, the record content includes a text summary generated based on the plurality of images; or the record content includes an image-text summary generated based on the plurality of images, wherein text content in the image-text summary is associated with an image.

In some embodiments, the image acquisition module 710 is further configured to: determine a resolution associated with the first mode; and acquire at least a portion of the image data based on the resolution; and/or determine a time interval period for taking the plurality of images and/or a duration of the target time period.

In some embodiments, the first mode is enabled in response to an enabling request of a user, and the enabling request includes: an enabling operation received via an interactive interface associated with the electronic device 110; or a first voice instruction received via an audio acquisition unit of the electronic device 110.

In some embodiments, the apparatus 700 further includes an exiting module configured to: exit the first mode in response to the power of the electronic device 110 being lower than a first threshold; or exit the first mode in response to a second voice instruction received via an audio acquisition unit of the electronic device 110.

In some embodiments, the apparatus 700 further includes a pausing module configured to: pause, during the electronic device 110 being in the first mode, the first mode in response to a pause condition being satisfied, to stop acquiring the image data, the pause condition including at least one of: the electronic device 110 including a wearable device with a wearing state not satisfying a predetermined condition; the power of the electronic device 110 being lower than a second threshold; a third voice instruction received via the audio acquisition unit of the electronic device 110; the electronic device 110 being triggered to provide audio content associated with the connected the terminal device 120; the degree of occlusion of the image acquisition unit being greater than a predetermined degree.

In some embodiments, the apparatus 700 further includes a reminding module configured to: play, in response to the record content being generated, a voice reminder using an audio playing unit of the electronic device 110.

In some embodiments, the electronic device 110 includes a wearable device.

In some embodiments, the electronic device 110 is a headphone device or a glasses device equipped with at least one camera.

In some embodiments, the electronic device 110 further includes a mode reminding unit, and the apparatus 700 further includes a signal module configured to: provide, using the mode reminding unit, a reminder signal indicating that the electronic device 110 is in the first mode.

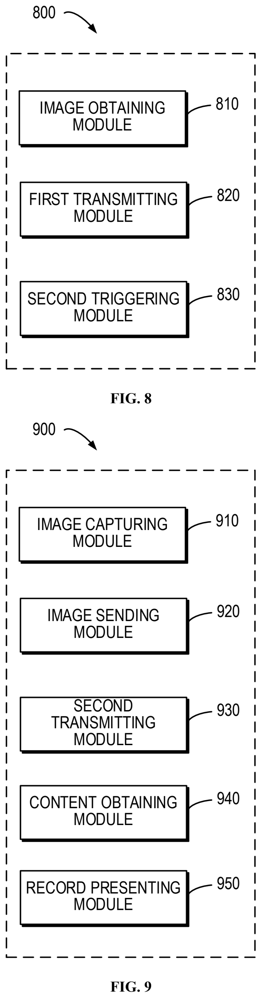

Fig. 8 illustrates a schematic structural block diagram of an example apparatus 800 for image interaction according to some embodiments of the present disclosure. The apparatus 800 may be implemented as or included in the terminal device 120. Each module/component in the apparatus 800 may be implemented by hardware, software, firmware, or any combination thereof.

As shown in Fig. 8, the apparatus 800 includes: an image obtaining module 810 configured to obtain image data from an electronic device 110 in wireless communication with the terminal device 120, the image data being acquired by an image acquisition unit equipped on the electronic device 110 during the electronic device 110 is in a first mode, the image data including a plurality of images corresponding to a target time period; a first transmitting module 820 configured to transmit the image data to a pre-trained model; and a second triggering module 830 configured to output, in response to the electronic device 110 exiting the first mode, record content generated by the pre-trained model based on the image data in an output unit associated with the electronic device 110.

In some embodiments, the apparatus 800 further includes a processing module configured to: receive, audio data from the electronic device 110 and within the target time period, the audio data being acquired using an audio acquisition unit equipped on the electronic device 110; and transmit the audio data or text data corresponding to the audio data to the pre-trained model for generating the record content.

In some embodiments, the output unit associated with the electronic device 110 includes an interactive interface, and the apparatus 800 further includes a content presenting module configured to: present, within the target time period, image content captured by the electronic device 110 in the interactive interface; and/or present, within the target time period, text content corresponding to audio data collected by the electronic device 110 in the interactive interface.

Fig. 9 illustrates a schematic structural block diagram of an example apparatus 900 for image interaction according to some embodiments of the present disclosure. The apparatus 900 may be implemented as or included in the image interaction system 100. The image interaction system 100 includes an electronic device 110 and a terminal device 120 in wireless communication. Each module/component in the apparatus 900 may be implemented by hardware, software, firmware, or any combination thereof.

As shown in Fig. 9, the apparatus 900 includes: an image capturing module 910 configured to acquire, using an image acquisition unit equipped on the electronic device 110, image data during the electronic device 110 is in a first mode; an image sending module 920 configured to send, by the electronic device 110, the image data to the terminal device 120; a second transmitting module 930 configured to transmit, by the terminal device 120, the image data to a pre-trained model; a content obtaining module 940 configured to obtain, by the terminal device 120 and in response to the electronic device 110 exiting the first mode, record content generated by the pre-trained model based on the image data; and a record presenting module 950 configured to output, by the terminal device 120, the record content in an output unit associated with the electronic device 110.

The units included in the apparatus 700, 800 or 900 may be implemented in various ways, including software, hardware, firmware, or any combination thereof. In some embodiments, one or more units may be implemented using software and/or firmware, such as machine executable instructions stored on a storage medium. In addition to machine executable instructions or as an alternative, some or all units in the apparatus 700, 800 or 900 may be implemented at least partially by one or more hardware logic components. As an example, rather than a limitation, example types of hardware logic components that may be used include Field Programmable Gate Array (FPGA), Application Specific Integrated Circuit (ASIC), Application Specific Standard (ASSP), System on Chip (SOC), Complex Programmable Logic Device (CPLD), and more.

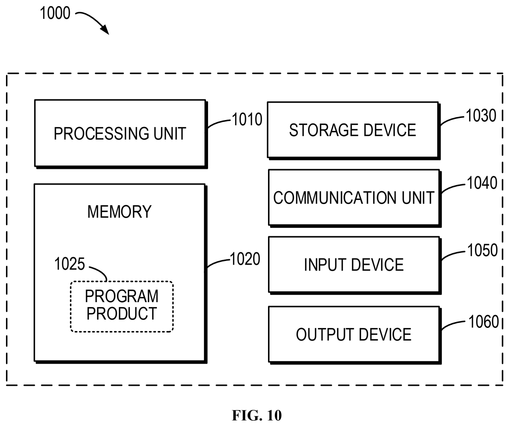

Fig. 10 illustrates a block diagram of an electronic device 1000 in which one or more embodiments of the present disclosure may be implemented. It should be understood that the electronic device 1000 shown in Fig. 10 is only exemplary, and should not constitute any limitation on the functionality and scope of the embodiments described herein. The electronic device 1000 shown in Fig. 10 may be used to implement the image interaction system 100 of Fig. 1.

As shown in Fig. 10, the electronic device 1000 is in the form of a general electronic device. The components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and may execute various processes based on the programs stored in the memory 1020. In a multi-processor system, multiple processing units execute computer executable instructions in parallel to improve the parallel processing capability of the electronic device 1000.

The electronic device 1000 typically includes multiple computer storage medium. Such medium may be any available medium that is accessible to the electronic device 1000, including, but not limited to, volatile and non-volatile medium, removable and non-removable medium. The memory 1020 may be a volatile memory (for example, a register, cache, Random Access Memory (RAM)), a non-volatile memory (such as a Read-Only Memory (ROM), Electrically Erasable Programmable Read-Only Memory (EEPROM), a flash memory), or any combination thereof. The storage device 1030 may be a removable or non-removable medium, and may include a machine readable medium such as a flash drive, a disk, or any other medium, which may be used to store information and/or data and may be accessed within the electronic device 1000.

The electronic device 1000 may further include additional removable/non-removable, volatile/non-volatile memory medium. Although not shown in Fig. 10, it is possible to provide a disk drive for reading from or writing into a removable, non-volatile disk (such as a "floppy disk"), and an optical disk drive for reading from or writing into a removable, non-volatile optical disk. In these cases, each drive may be connected to the bus (not shown) by one or more data medium interfaces. The memory 1020 may include a computer program product 1025, which has one or more program modules configured to perform various methods or acts of the various embodiments of the present disclosure.

The communication unit 1040 implements communication with other electronic devices through the communication medium. Additionally, the functions of the components of the electronic device 1000 may be implemented by a single computing cluster or multiple computing machines, which may communicate through a communication connection. Therefore, the electronic device 1000 may use a logical connection with one or more other servers, a network personal computer (PC) or another network node to operate in a networked environment.

The input device 1050 may be one or more input devices, such as a mouse, a keyboard, a tracking ball, etc. The output device 1060 may be one or more output devices, such as a display, a speaker, a printer, etc. The electronic device 1000 may also communicate with one or more external devices (not shown) as needed through the communication unit 1040, the external devices such as a storage device, a display device, etc., communicate with one or more devices that enable a user to interact with the electronic device 1000, or communicate with any devices (e.g., a network card, a modem, etc.) that enable the electronic device 1000 to communicate with one or more other electronic devices. Such communication may be performed via input/output (I/O) interfaces (not shown).

According to an illustrative implementation of the present disclosure, there is provided a computer-readable storage medium having computer executable instructions stored thereon, where the computer executable instructions are executed by a processor to implement the method described above. According to an illustrative implementation of the present disclosure, there is further provided a computer program product tangibly stored on a non-transitory computer-readable medium and including computer executable instructions, and the computer executable instructions are executed by a processor to implement the method described above.

Various aspects of the present disclosure are described herein with reference to the flowcharts and/or block diagrams of the method, the apparatus, the device and the computer program product implemented according to the present disclosure. It should be understood that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that these instructions, when executed by the processing unit of the computer or other programmable data processing apparatus, produce an apparatus for implementing the functions/acts specified in one or more blocks of the flowcharts and/or block diagrams. These computer-readable program instructions may also be stored in a computer-readable storage medium, these instructions cause a computer, a programmable data processing apparatus, and/or other devices to work in a specific manner, and thus, the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, another programmable data processing apparatus, or other devices, so that a series of operating steps are performed on the computer, the other programmable data processing apparatus, or the other devices to produce a computer-implemented process, thereby causing the instructions executed on the computer, the other programmable data processing apparatus, or the other devices to implement the functions/acts specified in one or more blocks of the flowcharts and/or block diagrams.

The flowcharts and block diagrams in the drawings illustrate the architecture, functionality, and operation of possible implementations of the systems, methods and computer program products according to multiple implementations of the present disclosure. In this regard, each block in the flowcharts or block diagrams may represent a module, a program segment, or a portion of an instruction, and the module, the program segment, or the portion of an instruction contains one or more executable instructions for implementing the specified logical function. In some alternative implementations, the functions marked in the block may also occur in an order different from that marked in the drawings. For example, two consecutive blocks may actually be executed substantially in parallel, or they may sometimes be executed in the reverse order, depending on the functions involved. It should also be noted that each block in the block diagram and/or the flowchart, and the combination of the blocks in the block diagram and/or the flowchart, may be implemented with a dedicated hardware-based system that performs specified functions or acts, or with a combination of dedicated hardware and computer instructions.

The implementations of the present disclosure have been described above. The above description is illustrative, not exhaustive, and is not limited to the disclosed implementations. Many modifications and changes are obvious to those of ordinary skill in the art without departing from the scope of the described implementations. The selection of the terms used herein is intended to best explain the principles, the actual applications, or the improvements to the technologies in the market of the implementations, or to enable other ordinary technical personnel in the art to understand the implementations disclosed herein.

## Claims

1. A method (400) for image interaction, applied at an electronic device, the method comprising:
acquiring (410) image data by an image acquisition unit equipped on the electronic device during the electronic device is in a first mode, the image data comprising a plurality of images corresponding to a target time period; and
triggering (420), in response to the electronic device exiting the first mode, output of record content generated by a pre-trained model based on the image data in an output unit associated with the electronic device.

2. The method (400) of claim 1, further comprising at least one of the following:
acquiring, by an audio acquisition unit equipped on the electronic device, audio data during the electronic device is in the first mode, and the record content is further generated based on the audio data,
exiting the first mode in response to the power of the electronic device being lower than a first threshold; or
exiting the first mode in response to a second voice instruction received via an audio acquisition unit of the electronic device; or
pausing, during the electronic device being in the first mode, the first mode in response to a pause condition being satisfied, to stop acquiring the image data, the pause condition comprising at least one of:
the electronic device comprising a wearable device with a wearing state not satisfying a predetermined condition;
the power of the electronic device being lower than a second threshold;
a third voice instruction received via an audio acquisition unit of the electronic device;
the electronic device being triggered to provide audio content associated with the connected terminal device;
the degree of occlusion of the image acquisition unit being greater than a predetermined degree, or
playing, in response to the record content being generated, a voice reminder using an audio playing unit of the electronic device.

3. The method (400) of claim 1 or 2, the output unit associated with the electronic device comprising an interactive interface, and the method further comprising:
triggering, in the interactive interface, presentation of image content captured by the electronic device within the target time period; and/or
triggering, in the interactive interface, presentation of text content corresponding to audio data acquired by the electronic device within the target time period.

4. The method (400) of claim 1, 2 or 3, wherein the acquiring the image data by the image acquisition unit equipped on the electronic device comprises:
periodically capturing the plurality of images by the image acquisition unit; or
capturing video content corresponding to the target time period by the image acquisition unit, the video content comprising a plurality of video frames corresponding to the target time period; and/or
wherein the acquiring the image data by the image acquisition unit equipped on the electronic device comprises:
determining a resolution associated with the first mode, and acquiring at least a portion of the image data based on the resolution; and/or determining a time interval for capturing the plurality of images and/or a duration of the target time period.

5. The method (400) of any preceding claim, wherein the electronic device is in wireless communication with a terminal device, and the record content is generated through:
sending, by the electronic device, the image data to the terminal device;
providing, by the terminal device, the image data to the pre-trained model; and
generating, by the pre-trained model, the record content based on the image data, wherein the pre-trained model is deployed on the terminal device or a server communicating with the terminal device, and optionally
wherein generating, by the pre-trained model, the record content based on the image data further comprises:
acquiring audio data by an audio acquisition unit equipped on the electronic device;
sending, by the electronic device, the audio data to the terminal device;
providing, by the terminal device, the audio data to the pre-trained model; and
generating, by the pre-trained model, the record content based on the image data and the audio data.

6. The method (400) of any preceding claim, wherein the record content comprises a text summary generated based on the plurality of images; or
the record content comprises an image-text summary generated based on the plurality of images, wherein text content in the image-text summary is associated with an image.

7. The method (400) of any preceding claim, wherein the first mode is enabled in response to an enabling request of a user, and the enabling request comprises:
an enabling operation received via an interactive interface associated with the electronic device; or
a first voice instruction received via an audio acquisition unit of the electronic device.

8. The method (400) of any preceding claim, wherein the electronic device comprises a wearable device, and optionally
wherein the wearable device is a headphone device or a glasses device equipped with at least one camera.

9. The method (400) of any preceding claim, wherein the electronic device further comprises a mode reminding unit, and the method further comprises:
providing, by the mode reminding unit, a reminder signal indicating that the electronic device is in the first mode.

10. A method (500) for image interaction, applied at a terminal device, the method comprising:
obtaining (510) image data from an electronic device in wireless communication with the terminal device, the image data being acquired by an image acquisition unit equipped on the electronic device during the electronic device is in a first mode, the image data comprising a plurality of images corresponding to a target time period;
transmitting (520) the image data to a pre-trained model; and
outputting (530), in response to the electronic device exiting the first mode, record content generated by the pre-trained model based on the image data in an output unit associated with the electronic device.

11. The method (500) of claim 10, further comprising:
receiving, within the target time period, audio data from the electronic device, the audio data being acquired by an audio acquisition unit equipped on the electronic device; and
transmitting the audio data or text data corresponding to the audio data to the pre-trained model for generating the record content.

12. The method (500) of claim 10 or 11, the output unit associated with the electronic device comprising an interactive interface, and the method further comprises:
presenting, within the target time period, image content captured by the electronic device in the interactive interface; and/or
presenting, within the target time period, text content corresponding to audio data acquired by the electronic device in the interactive interface.

13. A method (600) for image interaction, applied at an image interaction system comprising an electronic device and a terminal device in wireless communication, the method comprising:
acquiring (610) image data by an image acquisition unit equipped on the electronic device during the electronic device is in a first mode;
sending (620), by the electronic device, the image data to the terminal device;
transmitting (630), by the terminal device, the image data to a pre-trained model;
obtaining (640), by the terminal device and in response to the electronic device exiting the first mode, record content generated by the pre-trained model based on the image data; and
outputting (650), by the terminal device, the record content in an output unit associated with the electronic device.

14. An electronic device (1000), comprising:
at least one processing unit (1010); and
at least one memory (1020) coupled to the at least one processing unit (1010) and storing instructions executable by the at least one processing unit (1010), the instructions, when executed by the at least one processing unit (1010), causing the electronic device to perform the method of any of claims 1 to 9, 10 to 12 or 13.

15. A computer-readable storage medium having a computer program stored thereon, the computer program when executed by a processor, implementing the method of any of claims 1 to 9, 10 to 12 or 13.
